**Europäisches Patentamt**

**European Patent Office**

**Office européen des brevets**

(19)

(11) Veröffentlichungsnummer: **0 215 221**
**B1**

(12) **EUROPÄISCHE PATENTSCHRIFT**

(45) Veröffentlichungstag der Patentschrift:
06.09.89

(51) Int. Cl.⁴: **B 62 D 55/24**

(21) Anmeldenummer: **86109170.0**

(22) Anmeldetag: **04.07.86**

(54) Gleiskette.

(30) Priorität: **27.08.85 DE 3530496**

(43) Veröffentlichungstag der Anmeldung:
**25.03.87 Patentblatt 87/13**

(45) Bekanntmachung des Hinweises auf die Patenterteilung:
**06.09.89 Patentblatt 89/36**

(84) Benannte Vertragsstaaten:
**DE FR GB IT NL SE**

(56) Entgegenhaltungen:
**DE-A- 2 064 454**
**DE-B- 1 180 260**
**DE-C- 476 769**

(73) Patentinhaber: **Dr.Ing.h.c. F. Porsche**
**Aktiengesellschaft, Porschestrasse 42,**
**D-7000 Stuttgart 40 (DE)**

(72) Erfinder: **Helsper, Günther, Theodor-Heuss-Strasse 62,**
**D-7141 Eberdingen-Hochdorf (DE)**
Erfinder: **Depfenhardt, Friedrich, Dickenbergstrasse 23,**
**D-7521 Heimsheim (DE)**
Erfinder: **Jozeflak, Alfred, Dipl.-Ing.(F.H.),**
**Schillerstrasse 66, D-7531 Kieselbronn (DE)**

## Beschreibung

Die Erfindung bezieht sich auf eine Gleiskette nach dem Oberbegriff des Anspruchs 1.

Es sind Gleisketten bekannt geworden, deren Kettenführungsglieder mit Quertraversen über Schraubbolzen verbunden sind und welche über querverlaufende, in Kraftrichtung angeordnete Abstützungen in Form von Sitzrippen in Laufrichtung der Kette unverrückbar gehalten werden. Das Kettenführungsglied umfaßt im wesentlichen zwei über einen Grundsteg miteinander verbundene Schenkel, die im Abstand zueinander stehen und zwischen sich ein Antriebsrad aufnehmen. Durch die in Kraftrichtung vorgesehenen Sitzrippen wird die Befestigungsschraube relativ hohen Belastungen ausgesetzt, was leicht zu einem Bruch bzw. zu einem Lockern der Schraube und einem daraus resultierenden Verschieben des Kettenführungsgliedes auf seinem Reitsitz führt. Die Folge davon ist eine Verbiegung bzw. ein Bruch des Kettenführungsgliedes, was zu einem Abspringen der Kette führen kann. Auch wird durch den zwischen den beiden Schenkeln verbleibenden Raum der miteinander in Eingriff stehenden Kettenführungsglieder ein Eindringen von Steinen oder dergleichen begünstigt, wodurch ein Aufbiegen der Schenkel und somit ein nachfolgender Bruch leicht möglich wird.

Aufgabe der Erfindung ist es, eine einfach zu realisierende und dauerhafte Verbindung zwischen den Kettenführungsgliedern und den Quertraversen einer Gleiskette zu schaffen, wobei die Kettenführungsglieder äußeren, ein Verbiegen bewirkenden Einflüssen dauerhaft standhalten sollen.

Diese Aufgabe wird erfindungsgemäß durch die kennzeichnenden Merkmale des Anspruchs 1 gelöst. Weitere vorteilhafte Ausbildungen der Erfindung beinhalten die Unteransprüche.

Durch die Abstützung des Kettenführungsgliedes über längsverlaufende Sitzrippen an der Quertraverse der Gleiskette wird die Hauptkraft quer zur Kette direkt in die Traverse geleitet. Die Verbindungsschraube zwischen Kettenglied und Traverse kann somit bei diesen Kräften nahezu lastfrei gehalten werden.

Über einen durch die beiden Sitzrippen gebildeten keilförmigen Reitsitz wird das Kettenführungsglied in Laufrichtung der Kette klemmschlüssig gehalten, wobei über die Schraubverbindung eine einfache Befestigung an der Traverse erfolgt.

Zur elastischen Aufnahme von Kippbewegungen des Kettenführungsgliedes im Reitsitz ist die Befestigungsschraube mit einer Dehnhülse versehen, die vorzugsweise zwischen dem Schraubkopf und dem Kettenführungsglied angeordnet ist. Die Verwendung einer Dehnschraube zur Befestigung des Kettenführungsgliedes dient zur Schraubensicherung.

Das Kettenführungsglied besteht aus einem kompakten einteiligen Feingußteil, das etwa mittig seinen Befestigungsbereich aufweist, wobei sich ein Verbindungszahn zur einen Seite und zwei parallel verlaufende Schenkel zur anderen Seite in bezug auf den Befestigungsbereich erstrecken. Über einen unteren und einen oberen Steg im Befestigungsbereich erfolgt eine verstärkende Anbindung an den Hauptkörper. Zwischen den Schenkeln wird ein Verbindungszahn eines weiteren Kettenführungsgliedes geführt, so daß kein Freiraum verbleibt, in dem sich Steine und dergleichen festsetzen und den Schenkel aufbiegen können.

Denkbar wäre auch die Herstellung des Kettenführungsgliedes aus zwei Blechpreßteilen, die symmetrische Halbschalen aufweisen und die über Schraubmittel miteinander verbunden sind.

Ein Ausführungsbeispiel der Erfindung ist in der Zeichnung dargestellt und wird im folgenden näher beschrieben.

Es zeigt:

Fig. 1 eine schaubildliche Darstellung eines Kettenführungsgliedes mit Quertraverse nach dem Stand der Technik, wobei das Kettenführungsglied mit Ansicht von unten dargestellt ist,

Fig. 2 eine schaubildliche Darstellung des erfindungsgemäßen Kettengliedes mit Quertraverse, wobei das Kettenführungsglied mit Ansicht von unten dargestellt ist,

Fig. 3 einen Querschnitt durch eine Gleiskette mit Kettenführungsglied und Quertraverse,

Fig. 4 eine Ansicht in Pfeilrichtung X der Fig. 3 gesehen, wobei das Band der Kette nicht mitgezeichnet wurde,

Fig. 5 eine vergrößerte Darstellung des Dehnbolzens mit Dehnhülse, und

Fig. 6 eine schaubildliche Darstellung von zwei miteinander in Eingriff stehenden Kettenführungsgliedern auf ihren Quertraversen.

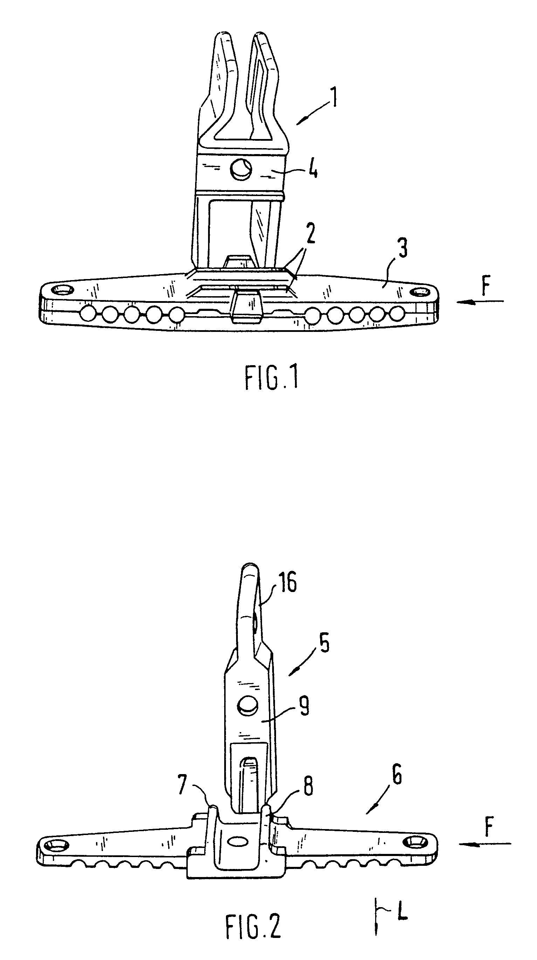

In Fig. 1 ist ein Kettenführungsglied 1 nach dem Stand der Technik gezeigt. Dieses weist einen gliedseitigen Sitz auf, der als Nut 4 mit einem U-förmigen Querschnitt ausgeführt ist. Das Kettenführungsglied 1 ist in querverlaufenden Sitzrippen 2 auf einer Quertraverse 3 gehalten, so daß in Kraftrichtung F eine Verschiebung in Querrichtung möglich ist.

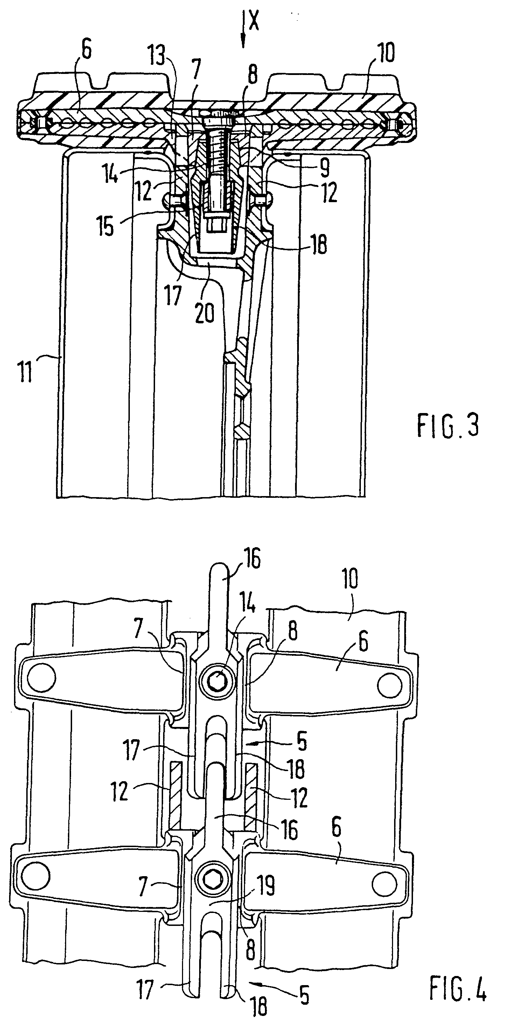

In Fig. 2 ist das erfindungsgemäße Kettenführungsglied 5 mit einer Quertraverse 6 gezeigt. Diese weist zwei längsverlaufende Sitzrippen 7 und 8 auf, zwischen denen das Kettenführungsglied 5 über seine fußseitige Aufnahme 9 klemmschlüssig gehalten wird. Die Sitzrippen 7 und 8 erstrecken sich in Laufrichtung (Pfeilrichtung L) der Kette und bilden eine Anordnung quer zur Hauptkraftrichtung F. Mit der Quertraverse 6 ist das Laufband 10 der Kette verbunden (Fig. 3). Zum Antrieb der Kette wird das Kettenführungsglied 5 bei einem Mittenantrieb von einem Antriebsrad 11 umgriffen. Dieses weist Zahnkränze 12 auf, die Nocken 13 an der Quertraverse 6 hintergreifen.

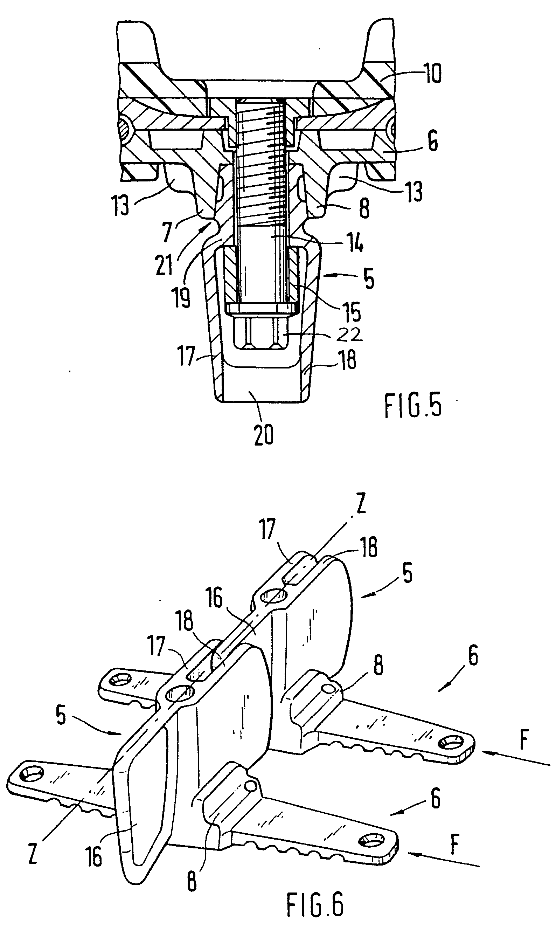

Die beiden Sitzrippen 7 und 8 bilden einen keilförmigen Reitsitz 21 (Fig. 5), der sich zur Öffnungsseite hin erweitert. Das Kettenführungsglied 5 weist hierzu die entsprechend ausgebildete fußseitige Aufnahme 9 auf.

Die Verbindung des Kettenführungsgliedes 5 mit der Quertraverse 6 erfolgt vorzugsweise über eine als Dehnbolzen 14 ausgebildete Befestigungsschraube. Dieser trägt eine Dehnhülse 15, welche zwischen einem Bolzenkopf 22 und dem Kettenführungsglied 5 angeordnet ist. Sie hat die Aufgabe, eine elastische Vorspannung zu erzielen, wobei der Dehnbolzen 14 zur Sicherung dient.

Wie Fig. 6 näher zeigt, umfaßt das Kettenführungsglied 5 einen in einer senkrechten Längsmittelebene Z-Z angeordneten Verbindungszahn 16, der mit einer aus den zwei Schenkeln 17 und 18 bestehenden Aufnahme einstückig verbunden ist. Die Schenkel 17 und 18 sind über Querstege 19, 20 miteinander verbunden und bilden ein Bestandteil des Haupttragkörpers. Zwischen dem Verbindungszahn 16 und den beiden Schenkeln 17 und 18 ist die Bohrung für den Dehnbolzen 14 vorgesehen.

## Patenansprüche

1. Gleiskette, insbesondere Endlosgummiband-Gleiskette, mit Kettenführungsgliedern (5), die in einer Quertraverse (16) zwischen Sitzrippen (7, 8) gehalten und mit der Traverse über Schraubbolzen (14) verbunden sind, dadurch gekennzeichnet, daß die Kettenführungsglieder (5) zwischen quer zur Hauptkraftrichtung (F) angeordneten, längsverlaufenden Sitzrippen (7, 8) abgestützt und in Querrichtung klemmschlüssig gehalten und über Bolzen (14) befestigt sind, derart, daß die auf die Kettenführungsglieder (5) und/oder die Traverse (6) einwirkenden Belastungen in der Hauptkraftrichtung (F) bei einem nahezu lastfrei gehaltenen Bolzen (14) aufnehmbar sind.

2. Gleiskette nach Anspruch 1, dadurch gekennzeichnet, daß die beiden Sitzrippen (7, 8) parallel und gegenüberliegend angeordnet sind und einen keilförmigen Reitsitz (21) mit einer sich zur Öffnungsseite hin erweiternden Aufnahme für ein Kettenführungsglied (5) bilden.

3. Gleiskette nach den Ansprüchen 1 oder 2, dadurch gekennzeichnet, daß das Kettenführungsglied (5) über einen Dehnbolzen (14) elastisch vorgespannt mit der Traverse (6) verbunden ist.

4. Gleiskette nach Anspruch 3, dadurch gekennzeichnet, daß der Bolzen (14) eine Dehnhülse (15) trägt, die zwischen dem Kettenführungsglied (5) und einem Kopf (22) des Bolzens (14) angeordnet ist.

5. Gleiskette nach einem oder mehreren der vorhergehenden Ansprüche, dadurch gekennzeichnet, daß das Kettenführungsglied (5) aus einem Feingußteil besteht und einen in einer senkrechten Mittelebene (Z-Z) angeordneten Verbindungszahn (16) umfaßt, an den sich eine im Querschnitt U-förmige Aufnahme mit zwei Schenkeln (17, 18) für einen weiteren Verbindungszahn eines nachfolgenden Kettenführungsgliedes anschließt und die beiden Schenkel (17, 18) mittels Querstege (19, 20) verbunden sind.

6. Gleiskette nach einem oder mehreren der vorhergehenden Ansprüche, dadurch gekennzeichnet, daß das Kettenführungsglied zweiteilig ausgeführt und in der Längsmittelebene getrennt ist und aus Blechpreßteilen besteht, die über Schraubmittel miteinander verbindbar sind.

## Claims

1. A track, in particular an endless rubber-belt track, having chain-guide members (5) which are held in a transverse cross arm (6) between seating ribs (7, 8) and which are connected to the cross arm by way of screw bolts (14), characterized in that the chain-guide members (5) are supported between longitudinally extending seating ribs (7, 8) arranged transversely to the main force direction (F) and are held by non-positive locking in the transverse direction and are secured by way of bolts (14) in such a way that the stresses acting upon the chain-guide members (5) and/or the cross arm (6) can be absorbed in the main force direction (F) with a bolt (14) held almost without load.

2. A track according to Claim 1, characterized in that the two seating ribs (7, 8) are arranged parallel and opposite and form a wedge-shaped sliding seat (21) with a receiving means widening towards the opening side for a chain-guide member (5).

3. A track according to Claim 1 or 2, characterized in that the chain-guide member (5) is connected resiliently prestressed by way of an extension bolt (14) to the cross arm (6).

4. A track according to Claim 3, characterized in that the bolt (14) carries an extension sleeve (15) which is arranged between the chain-guide member (5) and a head (22) of the bolt (14).

5. A track according to one or more of the preceding Claims, characterized in that the chain-guide member (5) consists of a precision casting and embraces a connexion tooth (16) which is arranged in a vertical median plane (Z-Z) and to which is joined a receiving means of U-shaped cross-section with two arms (17, 18) for a further connexion tooth of a following chain-guide member, and the two arms (17, 18) are connected by means of transverse webs (19, 20).

6. A track according to one or more of the preceding Claims, characterized in that the chain-guide member is made in two parts and is divided in the longitudinal median plane and comprises pressed sheet-metal parts which are connectable to one another by way of screw means.

## Revendications

1. Chenille, en particulier chenille à bande caoutchoutée continue, avec des éléments de guidage (5) logés entre des nervures d'appui (7, 8) prévues sur une patte transversale et fixés à ladite patte transversale au moyen de boulons filetés (14), caractérisée par le fait que les éléments de guidage (5) sont logés entre des épaulements d'appui (7, 8) qui s'étendent dans le sens de la longueur, disposés perpendiculairement à la direction (F) de la force de contrainte principale, et qu'ils sont immobilisés dans cette direction perpendiculaire et fixés au moyen des boulons (14) de telle manière que les charges appliquées aux éléments de guidage (5) et/ou pattes transversales (6) selon la direction (F) de la force principale, peuvent être absorbées pratiquement sans imposition d'une charge supplémentaire aux boulons (14).

2. Chenille selon la revendication 1, caractérisée par le fait que les deux épaulements d'appui (7, 8) sont disposés parallèlement et en regard l'un par rapport à l'autre et qu'ils constituent une encoche d'assemblage en forme de coin (21), évasée vers l'extérieur, pour le logement d'un élément de guidage (5) de la chenille.

3. Chenille selon les revendications 1 ou 2, caractérisée par le fait que l'élément de guidage (5) de la chenille est lié à la patte transversale (6) par serrage élastique au moyen d'un boulon expandeur (14).

4. Chenille selon la revendication 3, caractérisée par le fait que le boulon (14) est équipé d'un manchon élastique (15) qui est disposé entre l'élément de guidage (5) de la chenille et la tête (22) du boulon (14).

5. Chenille selon une ou plusieurs des revendications ci-dessus, caractérisée par le fait que l'élément de guidage (5) de la chenille est une pièce moulée de précision et comprend une dent de liaison par emboîtement (16) disposée dans un plan médian vertical (Z-Z), s'adaptant dans un évidement en forme de U compris entre deux joues (17, 18) associées à une autre dent liaison faisant partie de l'élément de guidage de la chenille, et que les deux joues (16, 17) sont réunies par des nervures transversales (19, 20).

6. Chenille selon une ou plusiers des revendications ci-dessus, caractérisée par le fait que l'élément de guidage de la chenille est réalisé en deux parties séparées par le plan médian longitudinal, et qu'il est constitué par des pièces en tôle emboutie, assemblées réunies au moyen de vis d'assemblage.

FIG.1

FIG.2

FIG.3

FIG.4

FIG.5

FIG.6